# EUROPEAN PATENT SPECIFICATION

(11) **EP 3 540 309 B1**
(45) Date of publication and mention of the grant of the patent: **17.09.2025**
(21) Application number: 18161206.0
(22) Date of filing: 12.03.2018
(51) Int. Cl.: F22D 1/00, F22D 1/36

(54) **SYSTEM AND CORRESPONDING HIGH EFFICIENCY ENERGY RECOVERY METHOD FOR INDUSTRIAL BOILERS OR STEAM GENERATORS**
SYSTEM UND ENTSPRECHENDES HOCHEFFIZIENTES ENERGIERÜCKGEWINNUNGSVERFAHREN FÜR INDUSTRIEKESSEL ODER DAMPFERZEUGER
SYSTÈME ET PROCÉDÉ DE RÉCUPÉRATION D'ÉNERGIE À HAUTE EFFICACITÉ POUR CHAUDIÈRES INDUSTRIELLES OU GÉNÉRATEURS DE VAPEUR

(43) Date of publication of application: 18.09.2019
(73) Proprietor: CANNON BONO S.P.A., 20068 Peschiera Borromeo (MI) (IT)
(72) Inventor: VOLPATO, Leonardo, 20068 Peschiera Borromeo (MI) (IT); LANDI, Antonio, 20068 Peschiera Borromeo (MI) (IT); LURAGHI, Vladimiro, 20068 Peschiera Borromeo (MI) (IT)
(74) Representative: Botti & Ferrari S.p.A.

(56) References cited:
- EP-A2- 2 249 079
- WO-A1-2012/114981
- WO-A1-2013/178446
- US-A- 5 687 674
- US-A1- 2006 076 428
- US-B2- 8 286 595

## Description

### Technical field

The present invention relates to a system and corresponding high efficiency energy recovery method for industrial boilers or steam generators.

More generally the present invention is applied in the field of boilers or steam generators for industrial use for powers varying from at least 1 MW up to 100 MW, but the following description is done with reference to this field of application with the only aim of simplifying the exposition thereof.

### Prior art

In this specific technical field it is known that the efficiency of a steam generator, net of the boundary conditions and of a good insulation, is substantially function of the flue gas outlet temperature.

In fact, it is well known that when the flue gas temperature decreases there is an increase in the generator efficiency. All the solutions adopted to date by the prior art to increase the efficiency of a steam generator aim at lowering the flue gas temperature.

Usually a steam generator of the industrial type is an apparatus which performs an isobaric heating of a liquid causing the boiling thereof and thus the change of state from liquid phase to steam phase; this occurs continuously and under controlled conditions to use the so-generated steam as an energy carrier.

In order to increase the efficiency of a generator a carrier fluid is needed, whereto the energy extracted from the flue gases is to be ceded.

Also the most modern steam generators from a conceptual point of view are composed of a first area, combustion chamber, where the thermal exchange with the liquid is mostly radiative and of a second area where the thermal exchange is mostly convective, these two areas delimit the boiler portion where the phase transition occurs. The combustion flue gases still rich in enthalpy pass at this point through exchange apparatuses which are charged with heating other carrier fluids concerning or not the boiler itself for being then conveyed to the chimney.

At present, as already pointed out, all the solutions developed by the prior art try and increase the efficiency of a steam generator by lowering the final flue gas temperature to about 60°C, the limit value below which, when using natural gas as a fuel, the condensation phenomenon arises. In order to meet this target the thermal carrier fluid, whereto the energy extracted from the flue gases is provided, is exploited.

The thermal carrier fluids can concern the same machine (for example: combustion air, feedwater, steam) or be external to the machine (for example: overheated water, diathermic oil circuit etc.). In the first case we talk about duty of the generator (as defined by the standard EN 12953-11 and EN 12952-5), in the second case we talk about efficiency of the system which the generator is inserted into.

The invention relates to both categories and it was conceived to exploit thermal carrier fluids concerning and not the generator.

The most common systems which are used to try and increase the efficiency in steam generators are essentially two and they exploit two different "cold" flows for recovering heat from the flue gases exiting from the boiler by means of a so-called economizer or by means of an air preheater.

The case of the economizer is looked at first. It is substantially a gas/liquid exchanger which transfers the heat from combustion flue gases, which can have a temperature between 180 ° C and 250° C according to the working conditions, to the thermal carrier fluid which is in general the feedwater. In essence, the sensible enthalpy is ceded to the thermal carrier fluid.

Typically the flue gas outlet temperature is about 10-20° C higher than the thermal carrier fluid fed to the economizer. In the typical case in which there is a temperature of the feedwater and/or of the carrier fluid between 80-160°C it is evident that the economizer alone does not allow to have flue gas outlet temperatures below the thermal carrier fluid temperature and thus to maximize the recovery of energy and thus of efficiency. For example, with a temperature of the thermal carrier fluid of 95°C a flue gas temperature of about 105°C with a duty of about 95,8% can be obtained.

Moreover, if the thermal carrier fluid were available at 150° C a considerable yield decrease would be noticed since a slighter reduction of the final flue gas temperature would be obtained, close to 160 ° C, i.e. with a yield of 93%. This situation is not so rare since the steam is sometimes used by closed cycles in bank which lead to have return water at high temperature and pressure.

The persons skilled in the art are aware of the fact that even only one percentage point of efficiency less corresponds to a considerable cost of fuel wasted for water boiling.

In brief, the first solution proposed by the prior art has a severe limitation due to the fact that the economizer alone does not allow to have final flue gas outlet temperatures below the thermal carrier fluid feed temperature.

The second solution proposed by the prior art which consists in adopting an air preheater is now examined.

The air preheater is substantially a gas/gas exchanger wherein flue gases directly transfer heat to the combustion air, usually at room temperature, for example 25° C. This type of gas/gas exchangers has relatively low global exchange coefficients, about a half with respect to gas/liquid ones, and this affects the exchange surfaces which must be, on equal terms, about twice with respect to the economizers.

Purely theoretically the use of air preheaters can allow the final flue gas temperatures to be considerably reduced up to reach 80° C, but this, besides requiring huge exchange surfaces, can also involve an increase in the polluting compounds emitted by the generator. More realistically, with the systems proposed by the prior art flue gases exit at a temperature of about 120°C, with efficiencies of the order of 95%.

At low loads and/or during transients, or still with very cold air, there can further be the risk of flue gas condensation, since the temperature of the flue gases exiting from the preheater cannot be controlled, unless by bypassing it completely. However, in this way the whole heat recovery would be lost.

Essentially, with this second known technical solution high efficiencies can be theoretically obtained, but exchange surfaces, thus costs, become very high as well as air temperatures which can cause a serious increase in emissions. Another limitation is the impossibility to dynamically control the flue gas outlet temperature and this does not allow the steam generator duty to be maximized under every working condition.

A first solution know in the art is disclosed in a PCT patent application No. WO 2013/178446 and in another PCT patent application No. WO 2012/114981. Both documents relate to an energy recovery system for industrial boilers or steam generators as in the preamble of the enclosed claim 1 but wherein however the feed of the feedwater is not regulated in order to obtain a better efficiency of the system.

Another solution proposed by the prior art which uses an air preheater is described in the European patent n° EP 2 249 079 B1. The preheater described in this document is combined to an economizer to try and obtain higher efficiencies of the steam generator. Although advantageous under various aspects and capable of obtaining an efficiency close to 95%, this known solution has operation limits particularly with slightly high feedwater temperatures (for example higher than 110°C).

Essentially, if attempts were made to use this solution to further increase the generator efficiency there would be the risk of having very high temperatures of the water exiting from the economizer, even with the risk of boiling in the economizer itself.

A second prior art solution is described instead in the US patent no. US 8,286,595 wherein the feedwater to the boiler (feed water) is used as a carrier fluid to absorb the enthalpy from the boiler. This solution provides a feedwater bleeding towards an air preheater while a control system regulates a valve controlling the flow rate of the water split towards the preheater. The control system bases the regulation on the temperature downstream of the economizer.

Also this solution only partially meets the aim of an increased efficiency since it has a considerable limitation in all those applications in which the feedwater has a temperature higher than 110°C, that solution takes into account as a carrier fluid exclusively the feedwater (feed water) and not other thermal carrier fluids.

The technical problem underlying the present invention is to conceive a system and corresponding high efficiency energy recovery method, for industrial boilers or steam generators, having such respective structural and functional features as to allow the highest possible efficiency to be obtained for this kind of apparatuses in presence of any thermal carrier fluid with a temperature higher than 80°C without incurring partial or total condensation of combustion flue gases.

An aim of the present invention is anyway to remedy the problems present in the prior art by means of a generator management system which is easy to manufacture at relatively limited costs.

A further aim of the present invention is to obtain high real yields in energy recovery through a dynamic control in the operation of the apparatus components by adopting a simple and efficient solution involving particularly limited manufacturing costs.

Finally, a further aim of the invention is to maximize heat recovery under every working condition of the steam generator.

### Summary of the invention

The solution idea underlying the present invention is to provide a mixed solution in which a first step of cooling the fed thermal carrier fluid is performed by increasing the combustion air enthalpy, and a second step of heating the thermal carrier fluid by means of at least one pair of economizers, to the detriment of the flue gas enthalpy. For the first step a liquid/gas exchanger commonly called fan heater is exploited which, to cool a percentage of the thermal carrier fluid, exploits the heating of the combustion air, for the second step a first and a second liquid/gas exchanger are exploited, commonly called economizers fed on the gas side by combustion flue gases.

More particularly, the core of the system manufactured according to the present invention for energy recovery from combustion flue gases is the distribution of the thermal carrier fluid between two suitably-sized exchange groups. A first group consists of two exchangers, a fan heater and at least one economizer, the first (fan heater) located on the combustion air duct and the second (economizer) located on the flue gas duct.

In the fan heater the thermal carrier fluid cedes a portion of the sensible heat thereof heating the combustion air, the so-cooled fluid is sent to the economizer which has thus a higher capacity to draw heat away from flue gases on account of the passage through the fan heater.

Advantageously, a second reduction group is also provided, formed by an additional exchanger, i.e. a second economizer, which collects the total thermal carrier fluid being fed, i.e. the feed one which bypassed the first reduction group and the one which instead passed therethrough.

With these devices it is possible to cool flue gases even to 60°C, although having a thermal carrier fluid higher than 110°C up to reach 160° C, obtaining a real efficiency equal to about 98%. Nevertheless in order to avoid acid condensation problems, in the flue gas cooling we can stop at a temperature of about 80°C.

Based on that solution idea the above-mentioned technical problem is solved by a high efficiency energy recovery system, for industrial boilers or steam generators, according to claim 1.

Advantageously, said fan heater having an air outlet fed at the inlet of the burner of said boiler and a liquid outlet fed at the inlet of said additional gas/liquid exchanger operating as an economizer.

Moreover, said fan heater and said additional gas/liquid exchanger operating as an economizer belong to an exchange and thermal reduction group incorporated in the system downstream of (on the flue gas side) and in parallel with (on the liquid side) said first gas/liquid exchanger operating as an economizer.

More particularly, said first gas/liquid exchanger operating as an economizer is fed in turn by a residual percentage of thermal carrier fluid and by the thermal carrier fluid exiting from said additional gas/liquid exchanger operating as an economizer.

By way of non-limiting example it is pointed out that, in case the thermal carrier fluid were the feedwater to the boiler, the percentage of said feedwater is preferably selected between 25% and 35% of the total feeding of the feedwater itself.

Moreover it must be said that the flue gas outlet of said burner is the feed of gas both for the gas/liquid exchanger operating as a first economizer and for the gas/liquid exchanger operating as a second economizer.

The invention also relates to a high efficiency energy recovery method for industrial boilers or steam generators according to claim 8.

Advantageously, the step of cooling the thermal carrier fluid involves an additional gas/liquid exchanger fed by the flow of air at room temperature and by said regulated percentage of the thermal carrier fluid fed to said at least one gas/liquid exchanger operating as an economizer.

More particularly, by way of non-limiting example, in case the thermal carrier fluid were the feedwater to the boiler, the above-mentioned percentage varies from at least 25% to 35% of the feedwater.

Moreover, the method provides to feed to said at least one gas/liquid exchanger operating as an economizer the residual percentage of said thermal carrier fluid as well as the thermal carrier fluid exiting from an additional gas/liquid heat exchanger operating in turn as an economizer. This regulated percentage is obtained through valve means which comprise a three-way choke valve receiving at the inlet the feeding of said thermal carrier fluid and distributing on respective outlets the feed of liquid for said additional gas/liquid exchanger and the residual feed of liquid for said at least one gas/liquid exchanger operating as an economizer.

It must be finally noticed that the flue gas outlet of said at least one gas/liquid exchanger operating as an economizer is the feed of gas for said additional gas/liquid exchanger operating in turn as an economizer. Further features and advantages of the system and method according to the invention will be more apparent from the detailed description, done hereafter, of preferred non-limiting embodiments, and from the dependent claims which outline preferred and particularly advantageous embodiments of the invention.

### Brief description of the drawings

The invention is illustrated with reference to the following figures, given by way of non-limiting example, in which:
- Figure 1 represents a schematic block view of a high efficiency energy recovery system for industrial boilers or steam generators;
- Figure 2 represents a schematic block view of a flow diagram illustrating an aspect of the method of the present invention;
- Figures 3 to 5 show respective diagrams quoting, in case the feedwater were used as a carrier fluid, the highest temperature of that water exiting from the economizer of a known system when the feedwater temperature varies and for different operating pressures;
- Figure 6 shows, in case the feedwater were used as a carrier fluid, a diagram quoting the highest water temperature in the recovery circuit of the system of the present invention when the water feed temperature varies and for a given operating pressure (10 barg);
- Figure 7 shows, in case the feedwater were used as a carrier fluid, a comparative diagram illustrating the trend of the combustion air temperature vs. the feedwater temperature for a known system (upper curve) and for the system of the present invention.

### Detailed description

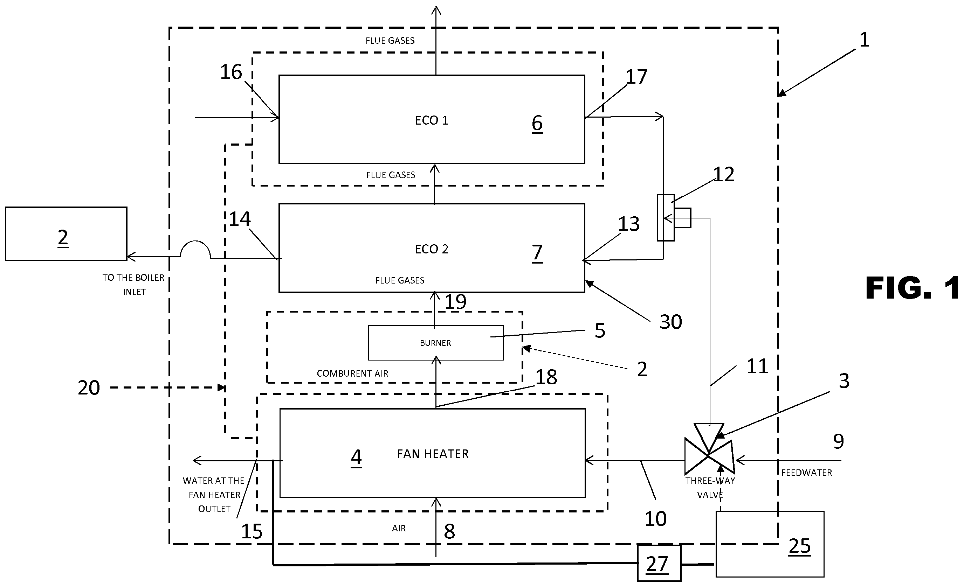

With reference to these figures, and particularly to the schematic example of Figure 1, a high efficiency energy recovery system manufactured according to the present invention is globally and schematically indicated with 1, for industrial boilers 2 or steam generators, which uses by way of non-limiting example the feedwater as a carrier fluid.

The system 1 according to the invention is intended for energy recovery from combustion flue gases and it is based on the use of three thermal exchange apparatuses, internally connected to each other and suitably sized and managed so as to meet the prefixed objective. The system is effectively applied to flue-gas-pipe and water-pipe steam generators, when the thermal carrier fluid temperature is in a range of values between 110°C up to 150°C.

The different combinations of the system according to the invention allow duties of the order of 97-97,5% to be achieved if wishing to keep the final flue gas discharge temperature above the dew point thereof and thus to avoid the formation of acid condensates. This result is achieved through the use of a bank which cools the thermal carrier fluid heating the comburent air, an economizer and a final flue gas cooling bank, i.e. a second economizer. The thermal carrier fluid cooling bank, first, and the final flue gas cooling bank, then, are fed in series, on the pipe side, by the same fluid having a suitable flow rate and temperature.

The proposed system can moreover resort to the boiler feedwater or another process fluid with appropriate features operating or not in a closed circuit.

The global flow rate of this fluid is split in two distinct streams of which one is first cooled, in a suitable thermal exchange bank, by the comburent air sent to the burner.

More in detail, the system 1 comprises a first exchange and thermal reduction group 20 comprising at least one first 4 and one second gas/liquid exchanger 6.

The first exchanger 4 is intended to perform a cooling of a percentage of a thermal carrier fluid flow 9 at a temperature, for example, comprised between 110 and 160°C and which preheats a comburent air flow 8, for example, close to 25°C.

The exchanger 4 is a gas/liquid exchanger which will be defined hereafter also with the slang term fan heater.

This fan heater 4 receives a percentage of the feed thermal carrier fluid 9 through valve means 3, for example a three-way choke valve, receiving at the inlet the feed thermal carrier fluid 9 and susceptible of regulating the feeding of the same thermal carrier fluid exiting on two respective outlets 10 and 11.

The first outlet 10 of the valve means 3 is connected to the inlet of the fan heater 4.

The second outlet 11 of the valve means 3 is connected instead to a branch 12 of a union tee, which will be discussed hereafter.

The system 1 according to the present invention can receive at the inlet the feed thermal carrier fluid 9 also at a relatively high temperature, for example higher than 110°C up to 160 ° C.

The valve means 3 allow a percentage of that feed thermal carrier fluid 9 to be addressed towards the first exchange and thermal reduction group 20, which also receives the flow 8 of comburent air drawn from the environment, which, on our assumption, can be on the average at a temperature of about 25 ° C.

According to the invention, the valve means 3 are interlocked to a regulation and control unit 25 which regulates the opening of the three-way choke valve on the basis of a water temperature signal drawn from an outlet 15 of the fan heater 4 through a sensor 27. In other words, the thermal carrier fluid flow rate at the inlet of the fan heater 4 is automatically regulated by the regulation and control unit 25 which controls the three-way valve 3 depending on a predetermined temperature value required to the thermal carrier fluid at the outlet 15 of the cooling bank of the fan heater 4. That flow rate is sent to a final flue gas reduction bank ECO1, located in the back of the system 1, which attends to the final flue gas cooling. This final flue gas bank is an additional economizer 6 which was provided in the system 1 of the present invention differently from the provisions in known solutions wherein only an economizer is used, which will be described hereafter.

If an outlet temperature value of the thermal carrier fluid equal to 60°C is suitably set for the fan heater 4, the fluid reaching the final stage ECO 1 has a temperature higher than the dew point of the combustion flue gases deriving from natural gas combustion, so that in the final flue gas bank ECO1 the phenomenon of condense formation is avoided.

At the outlet 17 of that final flue gas bank ECO1 the thermal carrier fluid almost entirely recovers the original temperature it had before being cooled in the fan heater 4. The flow exiting from the outlet 17 of the additional economizer is mixed in a union 12 with the remaining portion of thermal carrier fluid 9 and it reconstitutes the global flow approximately under the nominal temperature conditions.

At this point an economizer 7 is fed, also indicated with ECO2, present on the flue gas path at the outlet of the burner 5.

Advantageously, according to the present invention, the economizer 7 is sized so as to release flue gases with a thermal content adapted to recover then, in the final flue gas cooling bank ECO1, the appropriate temperature conditions of the thermal carrier fluid flow previously cooled by the comburent air in the fan heater 4.

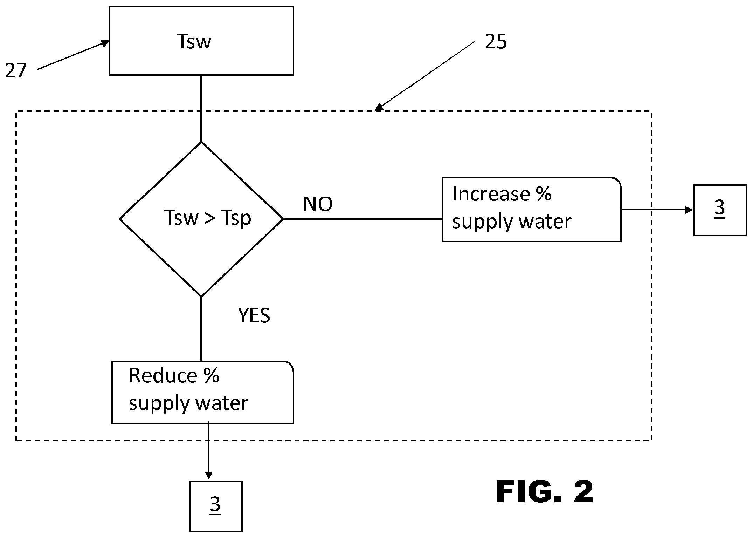

More particularly, as shown in the flow diagram of figure 2, the sensor 27 constantly detects the temperature Tsw of the thermal carrier fluid at the outlet 15 of the fan heater and it provides a signal to the unit 25 which compares it with a predetermined reference value Tsp. If the temperature of the thermal carrier fluid 15 is higher (Tsw > Tsp) than the reference value, then a control signal for the partial closure of the valve 3 is emitted to the fan heater 4; otherwise a signal ordering a greater opening is emitted.

The above-mentioned percentage of the thermal carrier fluid 9, in case it is the feedwater, is preferably selected between 25% and 35% of the total feeding, without this selection representing a limitation of the Applicant's rights. Other percentages can in fact be adopted according to the operating requirements of the system 1 according to the invention according to what is illustrated in the simple diagram of figure 2.

The result of the thermal exchange within the fan heater 4 is double. On the one side the thermal carrier fluid is released at about 60-70 ° C from an outlet 15 of the fan heater 4; on the other side heated comburent air is emitted through a second outlet 18 of the fan heater 4.

The thermal reduction mostly concerns the thermal carrier fluid 9 since the ambient air flow 8 is instead heated by this passage through the fan heater 4.

This comburent air is fed to a burner 5 of the boiler 2 wherefrom flue gases 19 exit at a high temperature and equal to about 240 ° C.

Advantageously, according to the invention, the fan heater 4 and the first economizer stage 6 form as a whole the first exchange and thermal reduction group 20 of the system 1.

This economizer stage 6 (quoted in the figure with the abbreviation ECO1) is substantially a second gas/liquid exchanger, additional with respect to ECO2, which directly receives at the inlet 16 the outlet 15 of the fan heater 4 which brings the thermal carrier fluid to a temperature of about 60-70 ° C. The stage 6 brings on an outlet 17, after the thermal exchange, the thermal carrier fluid temperature to about the value it had under the original condition 9.

The outlet 17 of the economizer 6 is connected to the union tee 12 receiving also the outlet 11 of the valve means 3.

The temperatures of the thermal carrier fluid which converges into the union 12 are similar.

In view of the different flow rates of those feedings of thermal carrier fluid, the outlet temperature from the union 12 is a weighted average on the respective flow rates between the inlet temperatures of the stream 11 and 17.

This union tee 12 is connected to an inlet 13 of the second economizer stage 7 (shown in the figure with the abbreviation ECO2), which can also be defined as a third exchanger or as a second exchange and thermal reduction group 30 of the system 1.

Essentially, the feed thermal carrier fluid 9 and the thermal carrier fluid exiting from the first thermal reduction stage 20 converge in the union 12 in order to be fed at the inlet 13 of the second thermal reduction stage 30.

This thermal carrier fluid is fed at the inlet 13 of the second economizer 7 which produces on an outlet 14 the highest thermal carrier fluid temperature of the whole circuit and which is fed at the inlet of the boiler 2.

It must be noticed that the water temperature at the outlet 14 from the economizer ECO2 must be lower than the saturation temperature at the operating pressure.

The flue gas outlet temperature must be close to 80 ° C to obtain the desired efficiency and yield.

The system according to the invention would be able to reach also 60°C as the final flue gas outlet temperature, but anti-condensation requirements suggest to work under the above-mentioned conditions up to reach about 80°C in the final flue gas temperature. The solution of the present invention represents an optimum compromise between the obtainable yield and optimum operating conditions for a more durable service life of the generator.

Essentially, the invention provides the reduction of the flue gas temperature through the preheating of the comburent air fed to the burner 5 of the boiler 2 and the preheating of the thermal carrier fluid through the economizers 6 and 7.

More particularly, the core of the system manufactured according to the present invention for energy recovery from combustion flue gases is the distribution of the thermal carrier fluid 9 between two suitably-sized exchange or reduction groups 20, 30. A first group 20 consists of two exchangers, the fan heater 4 and the first economizer 6. The fan heater 4 is inserted on the combustion air duct towards the burner 5 of the boiler 2 while the exchanger 6 operating as a first economizer ECO 1 is inserted on the flue gas duct downstream of the boiler 2 and of the economizer 7.

In the fan heater 4 the thermal carrier fluid 9 cedes a portion of the sensible heat thereof heating the combustion air at 25 ° C, the so-cooled thermal carrier fluid is sent to the first economizer 6 which has thus a higher capacity to draw heat away from flue gases on account of the fact that the thermal carrier fluid is at a lower temperature since it passed through the fan heater 4.

Advantageously, it is the second reduction group 30 formed by the third exchanger 7, i.e. by a third exchanger operating as a second economizer ECO2, which collects the total thermal carrier fluid fed through the union 12, i.e. both the thermal carrier fluid 9 coming from the outlet 11 of the three-way valve 3, which bypassed the first reduction group 20, and the one which passed instead through that first group 20 and exited from the outlet 17 of the first economizer ECO1.

It must be noticed that the flue gas outlet of the burner 5 is the feed of gas for the third gas/liquid exchanger 7 operating as a second economizer ECO2; while the flue gas outlet of said second economizer ECO2 is the feed of gas of the second gas/liquid exchanger 6 operating as a first economizer ECO1.

The regulation of the valve means 3 is performed by the regulation and control unit 25 on the basis of the temperature Tsw of the thermal carrier fluid 15 exiting from the fan heater 4 detected by the sensor 27. Experimental data detected by the Applicant proved that the system according to the invention correctly operates up to temperatures of 160 ° C of the thermal carrier fluid at the inlet 9. The optimum set point temperature Tsp of the thermal carrier fluid 15 at the outlet of the fan heater 4 is of about 60°C. Below this temperature Tsp, the control unit 25 will increase the percentage of the thermal carrier fluid 9 addressed towards the fan heater 4 by operating a closed-loop control until when the temperature will not reach again a value higher than the reference value Tsp.

In brief, the intervention logic of the control unit 25 is the following:
- if Tsw > Tsp the regulation valve 3 reduces the quantity of thermal carrier fluid to the fan heater 4;
- if Tsw < Tsp the regulation valve 3 increases the quantity of thermal carrier fluid to the fan heater 4.

With these devices it is possible to cool flue gases up to 80°C although having the feedwater up to 160 °C, specifically between 110°C and 160°C, obtaining an efficiency equal to about 98%.

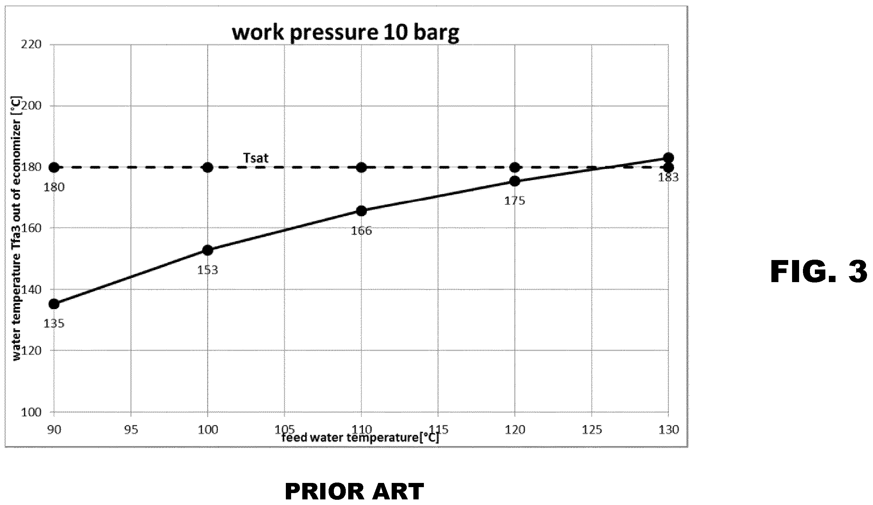

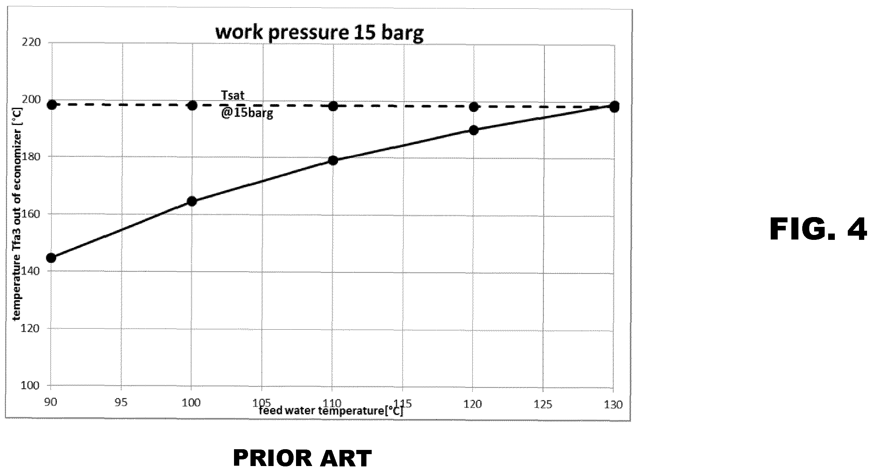

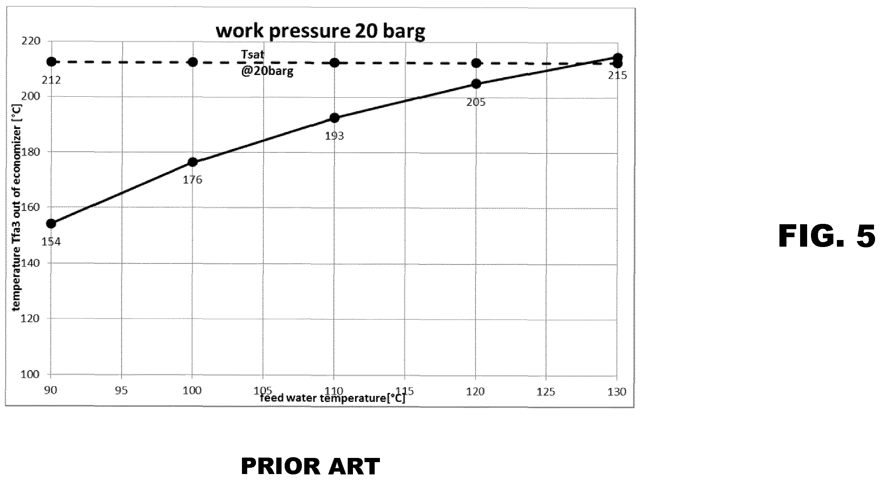

On the contrary, known systems are not able to reach these yields. Let's consider for example the diagrams of Figures 3 to 5 which show for different operating pressures (equal to 10, 15 and 20 barg, respectively) the highest temperature of the water exiting from the economizer for the system described in the patent EP 2 249 079 B1 when the feedwater temperature varies.

At the outlet of the economizer Tfa3 (see figure 1 of that patent) there is the risk of having a water temperature in the hottest point of the circuit very close to the saturation temperature, this condition is unacceptable for applications on steam generators. In fact, the feedwater temperature in the hottest point of the feeding circuit must be at least 15-20°C colder than the saturation temperature, to avoid boiling outside the cylindrical body. Only with a dynamic control of the flue gas outlet temperature according to the present invention it is possible to maximize the duty under every working condition and particularly when the carrier fluid feed temperatures reach 150°C.

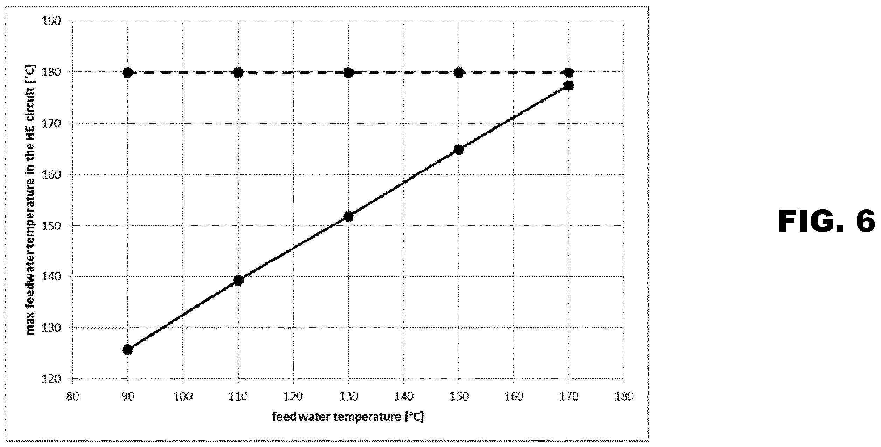

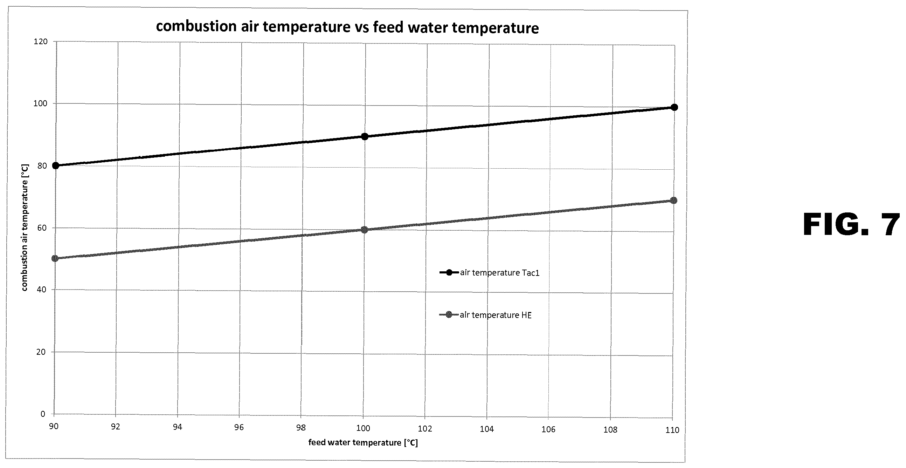

In the diagram of figure 6, it can be instead appreciated how the system according to the invention ensures a good margin (of at least 15°C) with respect to the saturation temperature with the feedwater up to 150°C. Finally, the comparative diagram of figure 7 shows the trend of the combustion air temperature with respect to the feedwater temperature for the system 1 of the present invention. As it can be appreciated, the air temperature of the system 1 according to the invention, represented by the lower line is always lower than the temperature related to the known system, described for example in the patent EP 2 249 079 B1, represented by the upper line.
- The system and method of the present invention solve therefore the technical problem and attain several advantages which are summarized hereafter:
- maximization of heat recovery under every working condition;
- the lowest possible temperature of the flue gases exiting from the last economizer stage;
- the formation of acid condensates, also partial ones, from combustion flue gases is avoided;
- dynamic control of the flue gas outlet temperature under every working condition;
- make the machine efficiency independent from the feed temperature;

Nothing prevents the materials used to manufacture the various heat exchangers from being of high quality even if this affects only to a limited extent the system yield which reaches the yields indicated by adopting a mixed solution with preheating of the comburent air regulated on the basis of the feedwater temperature.

Therefore, what is described here is to be intended by way of non-limiting example of the invention.

## Claims

1. High efficiency energy recovery system (1) for industrial boilers or steam generators, of the type comprising at least one gas/liquid exchanger (7) operating as an economizer (ECO2) for recovering heat from flue gases (19) exiting from a burner (5) of a boiler (2), and a gas/liquid fan heater (4) fed by a flow (8) of air at room temperature to be used as a comburent of said burner (5) and by a percentage of a thermal carrier fluid (9) bled from the feed of said economizer (ECO2); the high efficiency energy recovery system comprising:
- an additional gas/liquid exchanger (6) operating as an economizer (ECO1) fed at an inlet (16) by a liquid outlet (15) of said fan heater (4) and receiving at an inlet an outlet of the other economizer (ECO2) for recovering additional heat from the flue gases exiting from the burner (5) of the boiler (2);
- valve means (3) for bleeding and regulating the percentage of thermal carrier fluid (9) entering said gas/liquid fan heater (4); said valve means (3) being interlocked to a regulation unit (25) operating on the basis of a temperature signal (Tsw) detected by a sensor (27) located at the liquid outlet (15) of said fan heater (4) and on the basis of an optimum set point temperature (Tsp) of said thermal carrier fluid (9) at said outlet (15) of said fan heater (4) according to the following logic:
• if Tsw > Tsp said regulation valve (3) reduces the quantity of thermal carrier fluid (9) to said fan heater (4);
• if Tsw < Tsp said regulation valve (3) increases the quantity of thermal carrier fluid (9) to the fan heater (4)
whereby the high efficiency energy recovery system (1) is adapted to use said thermal carrier fluid at a temperature higher than 110°C up to reach 160 °C;
- said valve means (3) comprising a three-way choke valve (3) receiving at an inlet the feeding of said thermal carrier fluid (9) and distributing on respective outlets (10, 11) the feed of liquid for said gas/liquid fan heater (4) and the residual feed of liquid for said at least one gas/liquid exchanger (7) operating as an economizer (ECO2).

2. System according to claim 1, wherein said gas/liquid fan heater (4) is a fan heater having an air outlet (18) fed at an inlet of the burner (5) of said boiler (2) and the thermal carrier fluid outlet (15) fed at the inlet (16) of said additional gas/liquid exchanger (6) operating as an economizer (ECO1).

3. System according to claim 2, wherein said fan heater (4) and said additional gas/liquid exchanger (6) operating as an economizer (ECO1) belong to an exchange and thermal reduction group (20) integrated in the system (1) upstream of the first gas/liquid exchanger (7) operating as an economizer (ECO2).

4. System according to claim 2, wherein said first gas/liquid exchanger (7) operating as an economizer (ECO2) is fed in turn by a residual percentage of thermal carrier fluid (9) and by the thermal carrier fluid exiting from said additional gas/liquid exchanger (6) operating as an economizer (ECO1).

5. System according to claim 1, wherein, in case the thermal carrier fluid were the feedwater to the boiler, the percentage of feedwater (9) is preferably selected between 25% and 35% of the feeding of feedwater (9).

6. System according to claim 1, wherein the flue gas outlet of said burner (5) is the feed of gas for said at least one gas/liquid exchanger (7) operating as an economizer (ECO2).

7. System according to claim 2, wherein the flue gas outlet of said at least one gas/liquid exchanger (7) operating as an economizer (ECO2) is the feed of gas for said additional gas/liquid exchanger (6) operating as an economizer (ECO1).

8. High efficiency energy recovery method for industrial boilers or steam generators comprising at least one gas/liquid exchanger (7) operating as an economizer (ECO2) for recovering heat from flue gases (19) exiting from a burner (5) of a boiler (2), an additional gas/liquid exchanger (6) operating as an economizer (ECO1), and a gas/liquid fan heater (4) fed by a flow (8) of air at room temperature to be used as a comburent of said burner (5) and by a percentage of thermal carrier fluid (9) bled from the feed of said economizer (ECO2), wherein:
- at least one step of heat recovery from the flue gases exiting from the boiler is provided through a gas/liquid thermal exchange in at least one gas/liquid exchanger (7) operating as an economizer (ECO2) between the combustion flue gases and a thermal carrier fluid
- a step of preheating the comburent air fed to the burner (5) of the boiler (2) through a gas/liquid thermal exchange between an ambient air flow (8) and at least one regulated percentage of said thermal carrier fluid (9); said preheating step involves the gas/liquid fan heater (4) fed by the flow (8) of air at room temperature and by said regulated percentage of the feed thermal carrier fluid (9) fed to said at least one gas/liquid exchanger (7) operating as an economizer (ECO2), and wherein said thermal carrier fluid is regulated by valve means (3) and by a regulation unit (25) on the basis of a temperature signal (Tsw) by a sensor (27) at the liquid outlet (15) of said fan heater (4) and on the basis of an optimum set point temperature (Tsp) of said thermal carrier fluid (9) at the outlet (15) of said fan heater (4) according to the following logic:
• if Tsw > Tsp the quantity of thermal carrier fluid (9) to said fan heater (4) is reduced by said regulation valve (3);
• if Tsw < Tsp the quantity of thermal carrier fluid (9) to the fan heater (4) is increased by said regulation valve (3);
whereby said thermal carrier fluid (9) is used at a temperature higher than 110°C up to reach 160 °C.

9. Method according to claim 8, wherein, in case the thermal carrier fluid were the feedwater to the boiler, said percentage varies from at least 25% to 35% of the feedwater and it is regulated by a control unit (25) on the basis of the temperature (Tsw) of the water (15) exiting from said gas/liquid fan heater (4).

10. Method according to claim 8, wherein it feeds to said at least one gas/liquid exchanger (7) operating as an economizer (ECO2) the residual percentage of said thermal carrier fluid (9) as well as the thermal carrier fluid (9) exiting from an additional gas/liquid exchanger (6) operating as an economizer (ECO1).

11. Method according to claim 9, wherein said regulated percentage is obtained through valve means (3) which comprise a three-way choke valve receiving at an inlet the feeding of the feedwater (9) and distributing on respective outlets (10, 11) a feed of liquid for said gas/liquid fan heater (4) and the residual feed of liquid for said at least one gas/liquid heat exchanger (7) operating as an economizer (ECO2).

12. Method according to claim 9, wherein the flue gas outlet of said at least one gas/liquid exchanger (7) operating as an economizer (ECO2) is the feed of gas for said additional gas/liquid exchanger (6) operating as an economizer (ECO1).

## Patentansprüche

1. Hocheffizientes Energierückgewinnungssystem (1) für Industriekessel oder Dampferzeuger des Typs, der mindestens einen Gas/Flüssigkeits-Tauscher (7), der als ein Economiser (ECO2) zum Rückgewinnen von Wärme aus Rauchgasen (19), die aus einem Brenner (5) eines Kessels (2) austreten, arbeitet, und einen Gas/Flüssigkeits-Heizlüfter (4), der durch einen Strom (8) von Luft bei Raumtemperatur, der als ein brandfördernder Stoff des Brenners (5) verwendet werden soll, und durch einen Prozentsatz eines Wärmeträgerfluids (9), das aus der Einspeisung des Economisers (ECO2) entnommen wird, gespeist wird, umfasst;
wobei das hocheffiziente Energierückgewinnungssystem Folgendes umfasst:
- einen zusätzlichen Gas/Flüssigkeits-Tauscher (6), der als ein Economiser (ECO1) arbeitet, der an einem Einlass (16) von einem Flüssigkeitsauslass (15) des Heizlüfters (4) zugeführt wird, und an einem Einlass einen Auslass des anderen Economisers (ECO2) empfängt, um zusätzlich Wärme aus den Rauchgasen, die aus dem Brenner (5) des Kessels (2) austreten, zurückzugewinnen;
- Ventilmittel (3) zum Entnehmen und Regulieren des Prozentsatzes des Wärmeträgerfluids (9), das in den Gas/Flüssigkeits-Heizlüfter (4) eintritt; wobei die Ventilmittel (3) mit einer Reguliereinheit (25) verriegelt sind, die auf der Grundlage eines Temperatursignals (Tsw), das durch einen Sensor (27) detektiert wird, der sich an dem Flüssigkeitsauslass (15) des Heizlüfters (4) befindet, und auf der Grundlage einer optimalen Sollwerttemperatur (Tsp) des Wärmeträgerfluids (9) an dem Auslass (15) des Heizlüfters (4) gemäß der folgenden Logik arbeitet:
• falls Tsw > Tsp ist, verringert das Regelventil (3) die Menge des Wärmeträgerfluids (9) zu dem Heizlüfter (4);
• falls Tsw < Tsp ist, erhöht das Regelventil (3) die Menge des Wärmeträgerfluids (9) zu dem Heizlüfter (4);
wobei das hocheffiziente Energierückgewinnungssystem (1) dafür ausgelegt ist, das Wärmeträgerfluid bei einer Temperatur von mehr als 110 °C, die bis zu 160 °C erreichen soll, zu verwenden;
- wobei die Ventilmittel (3) ein Dreiwege-Drosselventil (3) umfassen, das an einem Einlass die Zufuhr des Wärmeträgerfluids (9) empfängt, und an jeweiligen Auslässen (10, 11) die Flüssigkeitszufuhr für den Gas/Flüssigkeits-Heizlüfter (4) und die restliche Flüssigkeitszufuhr für den mindestens einen Gas/Flüssigkeits-Tauscher (7), der als Economiser (ECO2) arbeitet, verteilt.

2. System nach Anspruch 1, wobei der Gas/Flüssigkeits-Heizlüfter (4) ein Heizlüfter ist, der einen Luftauslass (18), der an einem Einlass des Brenners (5) des Kessels (2) zugeführt wird, und den Wärmeträgerfluidauslass (15), der an dem Einlass (16) des zusätzlichen Gas/Flüssigkeits-Tauschers (6), der als ein Economiser (ECO1) arbeitet, zugeführt wird, aufweist.

3. System nach Anspruch 2, wobei der Heizlüfter (4) und der zusätzliche Gas/Flüssigkeits-Tauscher (6), der als ein Economiser (ECO1) arbeitet, zu einer Tausch- und Wärmereduktionsgruppe (20) gehören, die stromaufwärts des ersten Gas/Flüssigkeits-Tauschers (7), der als ein Economiser (ECO2) arbeitet, in das System (1) integriert sind.

4. System nach Anspruch 2, wobei der erste Gas/Flüssigkeits-Tauscher (7), der als ein Economiser (ECO2) arbeitet, wiederum durch einen restlichen Prozentsatz des Wärmeträgerfluids (9) und durch das Wärmeträgerfluid, das aus dem zusätzlichen Gas/Flüssigkeits-Tauscher (6), der als ein Economiser (ECO1) arbeitet, gespeist wird.

5. System nach Anspruch 1, wobei in dem Fall, in dem das Wärmeträgerfluid das Speisewasser zum Kessel ist, der Prozentsatz des Speisewassers (9) bevorzugt zwischen 25 % und 35 % der Zufuhr des Speisewassers (9) ausgewählt wird.

6. System nach Anspruch 1, wobei der Rauchgasauslass des Brenners (5) die Gaszufuhr für den mindestens einen Gas/Flüssigkeits-Tauscher (7), der als ein Economiser (ECO2) arbeitet, ist.

7. System nach Anspruch 2, wobei der Rauchgasauslass des mindestens einen Gas/Flüssigkeits-Tauschers (7), der als ein Economiser (ECO2) arbeitet, die Gaszufuhr für den zusätzlichen Gas/Flüssigkeits-Tauscher (6), der als ein Economiser (ECO1) arbeitet, ist.

8. Hocheffizientes Energierückgewinnungsverfahren für Industriekessel oder Dampferzeuger, die mindestens einen Gas/Flüssigkeits-Tauscher (7), der als ein Economiser (ECO2) arbeitet, um Wärme aus den Rauchgasen (19) zurückzugewinnen, die aus einem Brenner (5) eines Kessels (2) austreten, einen zusätzlichen Gas/Flüssigkeits-Tauscher (6), der als ein Economiser (ECO1) arbeitet, und einen Gas/Flüssigkeits-Heizlüfter (4), der durch einen Strom (8) von Luft bei Raumtemperatur, der als ein brandfördernder Stoff des Brenners (5) verwendet werden soll, und durch einen Prozentsatz eines Wärmeträgerfluids (9), das aus der Einspeisung des Economisers (ECO2) entnommen wird, gespeist wird, umfassen, wobei:
- mindestens ein Schritt der Wärmerückgewinnung aus den Rauchgasen, die aus dem Kessel austreten, durch einen Gas/Flüssigkeits-Wärmetausch in mindestens einem Gas/Flüssigkeits-Tauscher (7), der als ein Economiser (ECO2) arbeitet, zwischen den Verbrennungsrauchgasen und einem Wärmeträgerfluid, vorgesehen ist,
- ein Schritt des Vorwärmens der brandfördernden Luft, die dem Brenner (5) des Kessels (2) zugeführt wird, durch einen Gas/Flüssigkeits-Wärmetausch zwischen einem Umgebungsluftstrom (8) und mindestens einem regulierten Prozentsatz des Wärmeträgerfluids (9) vorgesehen ist;
wobei der Schritt des Vorwärmens umfasst, dass der Gas/Flüssigkeits-Heizlüfter (4) durch den Strom (8) von Luft bei Raumtemperatur und durch den regulierten Prozentsatz des zugeführten Wärmeträgerfluids (9), der dem mindestens einen Gas/Flüssigkeits-Tauscher (7) zugeführt wird, der als ein Economiser (ECO2) arbeitet, gespeist wird, und wobei das Wärmeträgerfluid durch Ventilmittel (3) und durch eine Reguliereinheit (25) auf der Grundlage eines Temperatursignals (Tsw) durch einen Sensor (27) an dem Flüssigkeitsauslass (15) des Heizlüfters (4) und auf der Grundlage einer optimalen Sollwerttemperatur (Tsp) des Wärmeträgerfluids (9) an dem Auslass (15) des Heizlüfters (4) gemäß der folgenden Logik reguliert wird:
• falls Tsw > Tsp ist, wird die Menge des Wärmeträgerfluids (9) zu dem Heizlüfter (4) durch das Regelventil (3) verringert;
• falls Tsw < Tsp ist, wird die Menge des Wärmeträgerfluids (9) zu dem Heizlüfter (4) durch das Regelventil (3) erhöht;
wobei das Wärmeträgerfluid (9) bei einer Temperatur von mehr als 110 °C, die bis zu 160 °C erreichen soll, verwendet wird.

9. Verfahren nach Anspruch 8, wobei in dem Fall, in dem das Wärmeträgerfluid das Speisewasser zum Kessel ist, der Prozentsatz von mindestens 25 % bis 35 % des Speisewassers variiert und durch eine Steuereinheit (25) auf der Grundlage der Temperatur (Tsw) des Wassers (15), das aus dem Gas/Flüssigkeits-Heizlüfter (4) austritt, reguliert wird.

10. Verfahren nach Anspruch 8, wobei dem mindestens einen Gas/Flüssigkeits-Tauscher (7), der als ein Economiser (ECO2) arbeitet, der restliche Prozentsatz des Wärmeträgerfluids (9) sowie das Wärmeträgerfluid (9), das aus einem zusätzlichen Gas/Flüssigkeits-Tauscher (6), der als ein Economiser (ECO1) arbeitet, austritt, zugeführt werden.

11. Verfahren nach Anspruch 9, wobei der regulierte Prozentsatz durch Ventilmittel (3) erhalten wird, die ein Dreiwege-Drosselventil umfassen, das an einem Einlass die Zufuhr des Speisewassers (9) empfängt und an Auslässen (10, 11) eine Zufuhr von Flüssigkeit für den Gas/Flüssigkeits-Heizlüfter (4) bzw. die restliche Zufuhr von Flüssigkeit für den mindestens einen Gas/Flüssigkeits-Tauscher (7), der als ein Economiser (ECO2) arbeitet, verteilt.

12. Verfahren nach Anspruch 9, wobei der Rauchgas-Auslass des mindestens einen Gas/Flüssigkeits-Tauschers (7), der als ein Economiser (ECO2) arbeitet, die Gaszufuhr für den zusätzlichen Gas/Flüssigkeits-Tauscher (6), der als ein Economiser (ECO1) arbeitet, ist.

## Revendications

1. Système de récupération d'énergie à haut rendement (1) pour chaudières industrielles ou générateurs de vapeur, du type comprenant au moins un échangeur gaz/liquide (7) fonctionnant comme un économiseur (ECO2) pour récupérer de la chaleur à partir de gaz d'échappement (19) sortant d'un brûleur (5) d'une chaudière (2), et un radiateur soufflant pour gaz/liquide (4) alimenté par un courant (8) d'air à la température ambiante devant être utilisé comme comburant dudit brûleur (5) et par un pourcentage d'un fluide de transfert de chaleur (9) soutiré de l'alimentation dudit économiseur (ECO2); le système de récupération d'énergie à haut rendement comprenant:
- un échangeur gaz/liquide additionnel (6) fonctionnant comme un économiseur (ECO1) alimenté au niveau d'une entrée (16) par une sortie de liquide (15) dudit radiateur soufflant (4) et recevant au niveau d'une entrée une sortie de l'autre économiseur (ECO2) pour récupérer de la chaleur additionnelle à partir des gaz d'échappement sortant du brûleur (5) de la chaudière (2);
- des moyens formant vanne (3) pour soutirer et réguler le pourcentage de fluide de transfert de chaleur (9) entrant dans ledit radiateur soufflant pour gaz/liquide (4); lesdits moyens formant vanne (3) étant verrouillés réciproquement à une unité de régulation (25) fonctionnant sur la base d'un signal de température (Tsw) détecté par un capteur (27) situé au niveau de la sortie de liquide (15) dudit radiateur soufflant (4) et sur la base d'une température de consigne (Tsp) optimale dudit fluide de transfert de chaleur (9) au niveau de ladite sortie (15) dudit radiateur soufflant (4) selon la logique suivante:
• si Tsw > Tsp ladite vanne de régulation (3) réduit la quantité de fluide de transfert de chaleur (9) dans ledit radiateur soufflant (4);
• si Tsw < Tsp ladite vanne de régulation (3) augmente la quantité de fluide de transfert de chaleur (9) dans le radiateur soufflant (4)
le système de récupération d'énergie à haut rendement (1) étant ainsi adapté pour utiliser ledit fluide de transfert de chaleur à une température supérieure à 110°C jusqu'à atteindre 160°C;
- lesdits moyens formant vanne (3) comprenant une vanne d'étranglement à trois voies (3) recevant au niveau d'une entrée l'alimentation en ledit fluide de transfert de chaleur (9) et distribuant sur des sorties respectives (10, 11) l'alimentation en liquide pour ledit radiateur soufflant pour gaz/liquide (4) et l'alimentation résiduelle en liquide pour ledit au moins un échangeur gaz/liquide (7) fonctionnant comme un économiseur (ECO2).

2. Système selon la revendication 1, dans lequel ledit radiateur soufflant pour gaz/liquide (4) est un radiateur soufflant ayant une sortie d'air (18) alimentée au niveau d'une entrée du brûleur (5) de ladite chaudière (2) et la sortie de fluide de transfert de chaleur (15) alimentée au niveau de l'entrée (16) dudit échangeur gaz/liquide additionnel (6) fonctionnant comme un économiseur (ECO1).

3. Système selon la revendication 2, dans lequel ledit radiateur soufflant (4) et ledit échangeur gaz/liquide additionnel (6) fonctionnant comme un économiseur (ECO1) appartiennent à un groupe d'échange et de réduction thermique (20) intégré dans le système (1) en amont du premier échangeur gaz/liquide (7) fonctionnant comme un économiseur (ECO2).

4. Système selon la revendication 2, dans lequel ledit premier échangeur gaz/liquide (7) fonctionnant comme un économiseur (ECO2) est alimenté tour à tour par un pourcentage résiduel de fluide de transfert de chaleur (9) et par le fluide de transfert de chaleur sortant dudit échangeur gaz/liquide additionnel (6) fonctionnant comme un économiseur (ECO1).

5. Système selon la revendication 1, dans lequel, dans le cas où le fluide de transfert de chaleur était l'eau d'alimentation de la chaudière, le pourcentage d'eau d'alimentation (9) est de préférence choisi entre 25 % et 35 % de l'alimentation en eau d'alimentation (9).

6. Système selon la revendication 1, dans lequel la sortie de gaz d'échappement dudit brûleur (5) est l'alimentation en gaz pour ledit au moins un échangeur gaz/liquide (7) fonctionnant comme un économiseur (ECO2).

7. Système selon la revendication 2, dans lequel la sortie de gaz d'échappement dudit au moins un échangeur gaz/liquide (7) fonctionnant comme un économiseur (ECO2) est l'alimentation en gaz pour ledit échangeur gaz/liquide additionnel (6) fonctionnant comme un économiseur (ECO1).

8. Procédé de récupération d'énergie à haut rendement pour chaudières industrielles ou générateurs de vapeur comprenant au moins un échangeur gaz/liquide (7) fonctionnant comme un économiseur (ECO2) pour récupérer de la chaleur à partir de gaz d'échappement (19) sortant d'un brûleur (5) d'une chaudière (2), un échangeur gaz/liquide additionnel (6) fonctionnant comme un économiseur (ECO1), et un radiateur soufflant pour gaz/liquide (4) alimenté par un courant (8) d'air à la température ambiante devant être utilisé comme comburant dudit brûleur (5) et par un pourcentage de fluide de transfert de chaleur (9) soutiré de l'alimentation dudit économiseur (ECO2), dans lequel:
- au moins une étape de récupération de chaleur à partir des gaz d'échappement sortant de la chaudière est effectuée par l'intermédiaire d'un échange de chaleur gaz/liquide dans au moins un échangeur gaz/liquide (7) fonctionnant comme un économiseur (ECO2) entre les gaz d'échappement de combustion et un fluide de transfert de chaleur,
- une étape de préchauffage de l'air comburant introduit dans le brûleur (5) de la chaudière (2) par l'intermédiaire d'un échange de chaleur gaz/liquide entre un courant d'air ambiant (8) et au moins un pourcentage régulé dudit fluide de transfert de chaleur (9); ladite étape de préchauffage implique le radiateur soufflant pour gaz/liquide (4) alimenté par le courant (8) d'air à la température ambiante et par ledit pourcentage régulé du fluide de transfert de chaleur d'alimentation (9) introduit dans ledit au moins un échangeur gaz/liquide (7) fonctionnant comme un économiseur (ECO2), et dans lequel ledit fluide de transfert de chaleur est régulé par des moyens formant vanne (3) et par une unité de régulation (25) sur la base d'un signal de température (Tsw) par un capteur (27) au niveau de la sortie de liquide (15) dudit radiateur soufflant (4) et sur la base d'une température de consigne (Tsp) optimale dudit fluide de transfert de chaleur (9) au niveau de la sortie (15) dudit radiateur soufflant (4) selon la logique suivante:
• si Tsw > Tsp la quantité de fluide de transfert de chaleur (9) dans ledit radiateur soufflant (4) est réduite par ladite vanne de régulation (3);
• si Tsw < Tsp la quantité de fluide de transfert de chaleur (9) dans le radiateur soufflant (4) est augmenté par ladite vanne de régulation (3);
ledit fluide de transfert de chaleur (9) étant ainsi utilisé à une température supérieure à 110°C jusqu'à atteindre 160°C.

9. Procédé selon la revendication 8, dans lequel, dans le cas où le fluide de transfert de chaleur était l'eau d'alimentation de la chaudière, ledit pourcentage varie d'au moins 25 % à 35 % de l'eau d'alimentation et est régulé par une unité de commande (25) sur la base de la température (Tsw) de l'eau (15) sortant dudit radiateur soufflant pour gaz/liquide (4).

10. Procédé selon la revendication 8, dans lequel il introduit dans ledit au moins un échangeur gaz/liquide (7) fonctionnant comme un économiseur (ECO2) le pourcentage résiduel dudit fluide de transfert de chaleur (9) ainsi que le fluide de transfert de chaleur (9) sortant d'un échangeur gaz/liquide additionnel (6) fonctionnant comme un économiseur (ECO1).

11. Procédé selon la revendication 9, dans lequel ledit pourcentage régulé est obtenu par des moyens formant vanne (3) qui comprennent une vanne d'étranglement à trois voies recevant au niveau d'une entrée l'alimentation en l'eau d'alimentation (9) et distribuant sur des sorties respectives (10, 11) une alimentation en liquide pour ledit radiateur soufflant pour gaz/liquide (4) et l'alimentation résiduelle en liquide pour ledit au moins un échangeur de chaleur gaz/liquide (7) fonctionnant comme un économiseur (ECO2).

12. Procédé selon la revendication 9, dans lequel la sortie de gaz d'échappement dudit au moins un échangeur gaz/liquide (7) fonctionnant comme un économiseur (ECO2) est l'alimentation en gaz pour ledit échangeur gaz/liquide additionnel (6) fonctionnant comme un économiseur (ECO1).
